# EUROPEAN PATENT SPECIFICATION

(11) **EP 1 360 804 B1**
(45) Date of publication and mention of the grant of the patent: **18.04.2012**
(21) Application number: 02716537.2
(22) Date of filing: 30.01.2002
(51) Int. Cl.: H04L 12/56, H04Q 3/00

(54) **METHOD AND ARRANGEMENT FOR BANDWIDTH SHAPING IN DATA COMMUNICATIONS SYSTEM**
VERFAHREN UND ANORDNUNG ZUR BANDBREITENFORMUNG IN EINEM DATENKOMMUNIKATIONSSYSTEM
PROCEDE ET SYSTEME DE MISE EN FORME DE LARGEUR DE BANDE DANS UN SYSTEME DE COMMUNICATION DE DONNEES

(30) Priority: 16.02.2001 SE 0100534
(43) Date of publication of application: 12.11.2003
(73) Proprietor: Telefonaktiebolaget LM Ericsson (publ), 164 83 Stockholm (SE)
(72) Inventor: JOHANSSON, Mathias, S-136 51 Haninge (SE); KÖLHI, Johan, S-117 32 Stockholm (SE)
(74) Representative: Sjöberg, Mats Hakan
(86) International application number: PCT/SE2002/000161
(87) International publication number: WO 2002/067513

(56) References cited:
- EP-A2- 0 926 922
- EP-A2- 1 035 751
- WO-A1-99/51001
- US-A- 5 537 469
- US-A- 5 822 319
- US-A- 5 930 259
- US-A- 5 948 069
- US-A- 6 069 895

## Description

### FIELD OF THE INVENTION

The present invention relates to data communications systems and to arrangements and methods for such a system. In particular the present invention relates to bandwidth shaping in data communications systems.

### BACKGROUND ART

The major interest in Internet and data communications has led to that more and more service providers provide services related to data communications. The demand for bandwidth within networks of service providers and out to the Internet increases, and thereby the demand from service providers for equipment that makes it possible to offer complex tailored services to their clients increases also. The service provider further wants the equipment to provide good control and monitoring means such that the service provider e.g. can make sure that the offered quality for a particular type of service is fulfilled by means of sufficient bandwidth being provided.

A service provider may for instance have as a business concept to offer business clients data communications means in the service provider's own data network, as well as access to the Internet via this data network. The product that the service provider then sells is bandwidth internally within the own data network and bandwidth out to the Internet.

The type of data network of the service provider may vary. Examples of different types of data networks are Ethernet, ATM, Token Ring, DTM and POS (Packet over Sonet/SDH). The data network is connected to the Internet by means of at least one gateway, which functions as a bridge between the Internet and the data network of the service provider and which is able to translate data between different types of protocols.

In a data network, data is transmitted in packets, which are built according to rules of some particular protocol. Several protocols can also be combined to create protocol structures with several levels wherein each level has a certain function. Thus data packets may be built in several steps according to a series of different protocols.

Internet is based on the protocol suite that is called TCP/IP, where TCP stands for Transmission Control Protocol and IP stands for Internet Protocol. TCP and IP are two common protocols within the TCP/IP suite, after which the whole protocol suite is named. The data network of the service provider may, like the Internet, be based on IP or on some other protocol. Data packets, which originate from the data network of the service provider and are to be transmitted out on the Internet, must however be translated to IP, if some other protocol than IP is used in the data network of the service provider. As mentioned above, the gateway that interconnects the data network of the service provider and the Internet may handle this translation.

As a rule, the data network of the service provider comprises, apart from said gateway, several so-called routers. A router routes data packets by means of examining the data packets to find their destination, and then forwards them to another router closer to the final destination of the data packets. The difference between a router and a gateway is diffuse and the terms are many times used as synonyms. Both a router and a gateway route data packets. However, the term gateway is usually used for a type of router which not only routes traffic but which also has the ability to translate data between different types of protocols. We will here use the term gateway for the unit that functions as a bridge between the Internet and the data network of the service provider, but it is also possible to call this unit a router.

At the periphery of the data network of the service provider there are so-called edge routers having ports to which the clients of the service provider are connected. If the client is a company, the equipment that is connected the port of the edge router may for instance be a router that connects the company Intranet to the data network of the service provider

Since bandwidth in a data network is a limited recourse, it is desirable to monitor and control the use of bandwidth. The technique for controlling the bandwidth use of different traffic streams is called bandwidth shaping. A type of device that is used to perform bandwidth shaping is a so-called shaper. If for instance the service provider wishes to guarantee that a client's bandwidth out to the Internet does not go below a first level and does not exceed a second level, a shaper may be connected between the Internet and the gateway or be integrated with the gateway. The shaper has a limited ability to control bandwidth. The only bandwidth that it can influence is the bandwidth during the last part of the way to the Internet and thus it can only guarantee a client's bandwidth on this part. If a bottleneck arises further down in the data network of the service provider, the shaper cannot influence this, which means that the bandwidth guarantee for a client, which a shaper can give, is no real guarantee since it only controls the bandwidth on part of the distance that a traffic stream has to travel on its way to the Internet. Neither does the shaper offer any possibility to control the bandwidth use of traffic streams between clients connected to the data network of the service provider.

A further type of bandwidth shaping is described in the international patent application WO 99/51001, which describes a method and device for so-called bandwidth pooling. The device for bandwidth pooling comprises a function for bandwidth shaping wherein available bandwidth on one or several common communications connections is distributed to a number of subscriber lines based on the needs and quality requirements of each line, such that unused bandwidth is small and a high degree of utilization is achieved.

From the U.S. Patent No. US-A-5 948 069, a system for providing different QoS to different clients are previously known. The clients may request a certain bandwidth and then a special communication path is selected using a routing table storing information that is used for selecting a path that provides at least the requested bandwidth. D2 treats techniques, methods and systems for routing data packets a certain path providing the requested quality requirements. Like document US-A-5 948 069, the European Patent Application EP-A2-1035 751 treats techniques, methods and systems for routing data packets a certain path providing the requested quality requirements.

In the U.S. Patent US-A-5 930 259, a method and a system is described for routing data packets by performing a selection of suitable ATM connections based on information in a routing table. The routing is performed in such a way that the different receivers are provided with the traffic bandwidth that each receiver has requested.

A typical wish of a service provider is to be able to sell a service to a client, wherein the client gets a guaranteed specified bandwidth to the Internet and an unspecified bandwidth internally within the data network of the service provider, which unspecified bandwidth may be very high but has no guaranteed magnitude like the bandwidth to the Internet. The service provider has no specific costs for the bandwidth internally within the own network compared to the bandwidth to the Internet. Therefore, the service provider typically wishes to offer the highest possible bandwidth internally within the own data network, which the client often perceives as "free speed", i.e. unlimited bandwidth. However, the service provider wants to be able to control the bandwidth usage internally within the data network so that there is no risk that the internal traffic limits traffic destined for the Internet, such that the guaranteed bandwidth cannot be provided in reality.

The above mentioned wishes of the service provider are difficult to fulfil with existing techniques. The use of a shaper out towards the Internet does not provide the service provider with the control that he wishes internally in the own network and the technique described in the international patent application WO 99/51001 does not provide the possibility to shape different types of traffic as desired. One option is to manually configure the routers of the data network with exact settings of the bandwidth that each separate traffic stream may use. However, this is impossible in practice since a normal-sized data network would require so many settings that the manual work involved in setting them would become almost insuperable. Furthermore, limitations in the number of quality parameters that may be programmed in the routers may prevent this.

### SUMMARY OF THE INVENTION

The above-mentioned problem of controlling bandwidth usage internally in a data network while being able to guarantee a predetermined bandwidth out towards an external data network, e.g. the Internet, is solved by means of the present invention.

An object of the present invention is to provide arrangements and methods for bandwidth shaping that makes it possible to control the bandwidth usage of both internal traffic within the data network and external traffic out towards the external data network.

The above-mentioned object is achieved by means of a router as described in claim 1, by means of a method as described in claim 7, by means of a superordinate operating system as described in claim 13, and by means of a data communications system as described in claim 17.

According to the present invention, bandwidth shaping, which can be adjusted according to different traffic streams and which depends in the destination of each particular traffic stream, is achieved.

The destination-dependent bandwidth shaping according to the present invention is achieved by means of introducing quality of service profiles in a router according to the present invention, which quality of service profiles are based on the contents of the router's routing table. The routing table contains information on how traffic to known destination should be routed and information concerning whereto traffic to unknown destinations should be forwarded. By creating an association between the quality of service profiles and the routing table, the bandwidth shaping can be made dependent on the contents of the routing table. According to an embodiment of the invention, traffic streams to destinations that are known and specified in the routing table are allocated bandwidth according to a first set of requirements, while traffic streams to destinations that are not specified in the routing table are allocated bandwidth according to a second set of requirements.

A superordinate operating system according to the present invention is arranged to provide the router according to the invention with quality of service profiles that are associated with the routing table as described above.

The invention further comprises a method for bandwidth shaping wherein information in the routing table is used to allocate bandwidth to different traffic streams as described above.

Furthermore, the invention also comprises a system for bandwidth shaping, which is arranged to make use of the information in the routing table to allocate bandwidth to different traffic streams as described above.

An advantage of the present invention is that it allows for complex bandwidth shaping with a minimum of administration. By using the information in the routing table in the quality of service profiles few specific settings need to be made in each router, which makes the bandwidth shaping according to the invention easy to implement.

Another advantage of the present invention is that it makes it possible to provide services with complicated bandwidth shaping in large data networks in which it previously was impossible, due to the insuperable amount of manual work required, and due to limitations in the number of quality parameters in the routers of the data network.

Yet another advantage of the present invention is that it provides flexible bandwidth shaping which, when it is implemented in a data network, is self-configuring such that often no particular adjustments in existing quality of service profiles are required when the data network changes, for example by means of yet another router or client equipment being connected to the data network. The solution of the invention is thus very useful in data network applications for which scaleability is important, since an addition to the data network affects the bandwidth shaping of the invention little or not at all, depending on e.g. the set requirements and the available bandwidth in the data network.

In addition, the present invention has the advantage that it makes it possible to provide differentiated services to users of a data network. Herein, differentiated services means services that may be specially adapted to the client and to each client's desired quality for different types of traffic streams.

The invention will now be described in more detail by means of preferred embodiments and with reference to the accompanying drawings.

### BRIEF DESCRIPTION OF DRAWINGS

Fig. 1 shows a block diagram of a data communications system in which bandwidth shaping is desirable.
Fig. 2 shows a block diagram of a data communications system wherein a shaper according to prior art is used for bandwidth shaping.
Fig. 3 shows a block diagram that illustrates quality profiles, which are associated with a routing table according to the present invention.
Fig. 4 shows a block diagram that illustrates an alternative embodiment of quality profiles, which are associated with a routing table according to the present invention.
Fig. 5 shows a diagram that illustrates yet an alternative embodiment of quality profiles according to the present invention.
Fig. 6 shows a block diagram of a data communications system in which bandwidth shaping according to the present invention is used.
Fig. 7 shows a diagram that illustrates yet an alternative embodiment of quality profiles according to the present invention.
Fig. 8 shows a diagram that illustrates yet an alternative embodiment of quality profiles according to the present invention.
Fig. 9 shows a flow diagram of a method for bandwidth shaping according to the present invention.

### DETAILED DESCRIPTION OF PREFERRED EMBODIMENTS

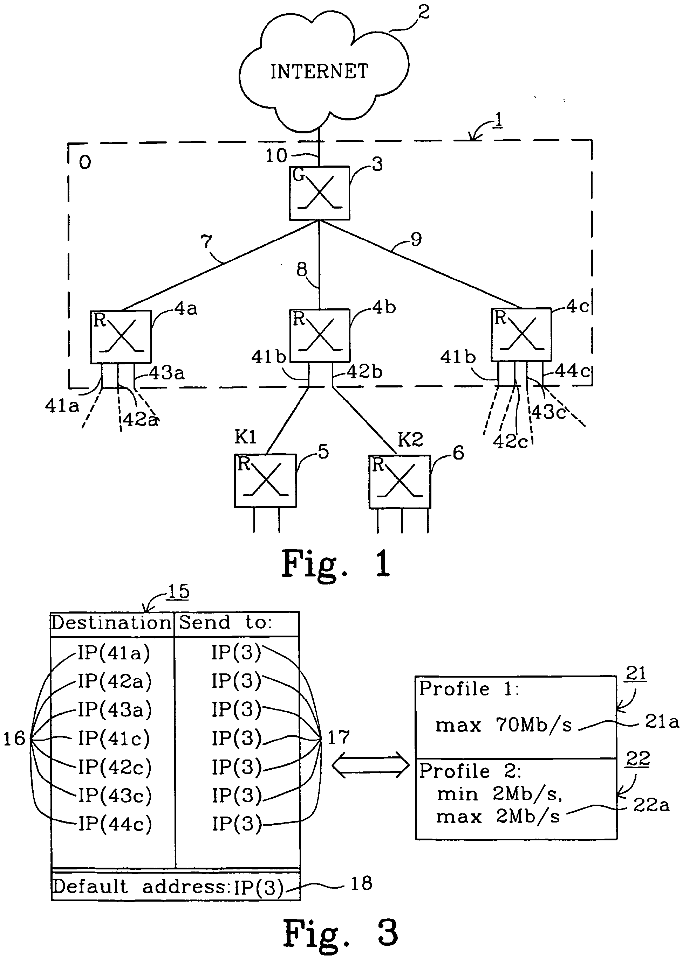

Fig. 1 shows a data network 1 of a service provider O that is connected to the Internet 2 by means of a gateway 3. The data network of the service provider comprises several edge routers 4a, 4b, 4c. Fig. 1 shows three such edge routers but this number may be considerably larger and also smaller. Each of the edge routers 4a, 4b, 4c is connected to the gateway. Each router comprises a number of ports 41a, 42a, 43a, 41b, 42b, 41c, 42c, 43c, 44c to which sets of client equipment are connected. Fig. 1 shows only two such sets of client equipment 5, 6 that are connected to the ports 41b, 42b. For the other ports dashed lines indicate that sets of client equipment are connected to these ports also. The sets of client equipment may for instance be routers that connect client data networks to the data network of the service provider or computer terminals that are directly connected to the data network of the service provider (without going through a client data network). The number of ports of a router may vary and may be considerably more than what is shown for the routers 4a, 4b, 4c in Fig. 1.

The sets of client equipment 5, 6 that are shown in Fig. 1 are routers that connect clients' data networks (not shown in Fig. 1) to the data network of the service provider. In fig. 1, the data network of a first client K1 is connected to the data network of the service provider by means of the client equipment 5 and the data network of a second client K2 is connected to the data network of the service provider by means of the client equipment 6.

The service provider O sells bandwidth in its data network to the clients K1, K2. Data communication between the clients can take place via the data network of the service provider, and the clients are also offered access to the Internet 2 via the data network of the service provider.

The data network of the service provider comprises connections 7, 8, 9, 10 with limited bandwidth. The available bandwidth is distributed among a plurality of traffic streams. As an example, bandwidth that is available on the connection 7 will be used interalia by traffic streams between the client equipment connected to the edge router 4a and the client equipment connected to the edge router 4c, and by traffic streams between the client equipment connected to the edge router 4a and the Internet 2.

As described above, a typical desire of the service provider O is to be able to sell a service to the clients wherein the clients receive a guaranteed specified bandwidth out to the Internet 2 and an unspecified bandwidth internally within the data network 1 of the service provider, which bandwidth may be very high but which does not have an exact guaranteed bandwidth like the bandwidth out to the Internet. Since the service provider owns the data network 1 himself, he has no specific costs for bandwidth internally within the data network compared to the bandwidth to the Internet 2. Therefore, the service provider O typically wishes to offer the highest possible bandwidth for data communication between the clients K1, K2 that are connected to the data network 1 of the service provider. However, it is important for the service provider to be able to control the bandwidth usage between the clients so that this traffic does not risk limiting traffic destined for the Intent, such that the guaranteed bandwidth to the Internet cannot be provided in reality. It is thus desirable for the service provider O to be able to perform bandwidth shaping on different traffic streams.

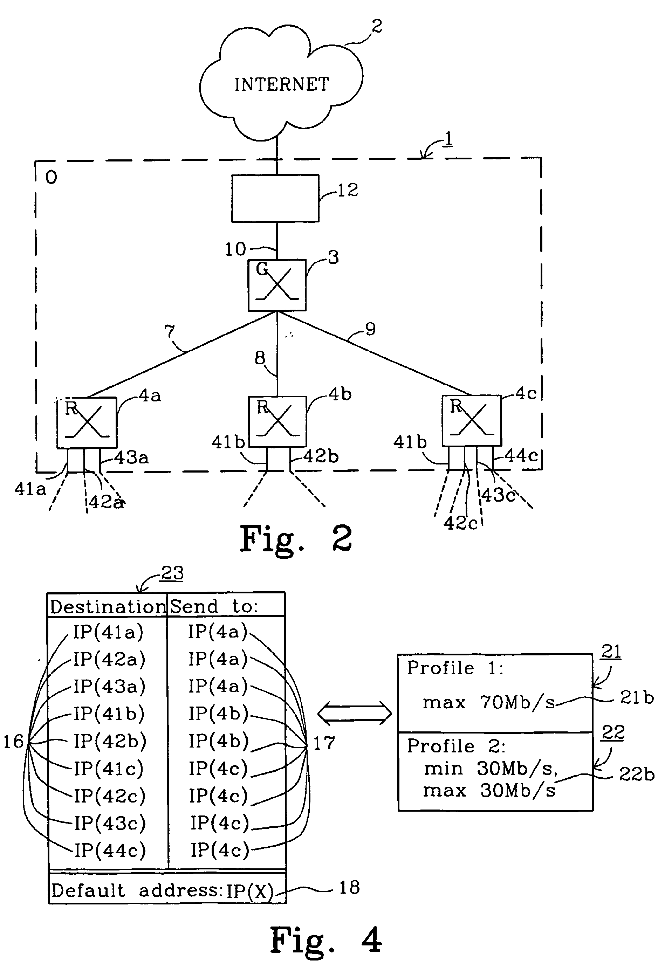

As mentioned above a limited control over the bandwidth usage may be achieved by means of connecting a shaper 12, as shown in Fig. 2. However, as mentioned, the shaper can only be used for influencing the bandwidth on the last part of the way out to the Internet. Thus, the shaper provides no control over the bandwidth usage of traffic streams from the clients of the service provider on the connections 7, 8, 9.

The present invention provides a possibility to perform bandwidth shaping on all traffic streams in the data network 1 of the service provider. This is made possible by means of using quality of service profiles, which are associated with previously existing routing tables in the routers 4a-4c and the gateway 3, and which are based on the contents of the routing tables.

Fig. 3 shows a schematic illustration of a routing table 15. The routing table 15 belongs to the router 4b and parts of the contents of the routing table are illustrated schematically in the figure. The routing table 15 comprises information regarding a multitude of destination addresses 16. If the data network of the service provider is based on IP, these addresses are IP-addresses, which we assume is the case in this example. In the figure, IP(41a) represents an address that is associated with the port 41 a of the router 4a. The address IP(41a) may be a so-called IP subnet address or an IP host address depending on what the network architecture looks like. However, what is important for this description is just that the destination address of a data packet may be compared to the address IP(41a) in the routing table 15 to decide whether or not the packet is to be sent to this address. The way in which routing tables and their information are used is well known to the person skilled in the art and is therefore not described in detail herein.

Analogously to the way in which the denomination IP(41a) is used to represent the address associated with the port 41a, the denominations IP(42a), IP(43a), IP(41c) etc. are used to represent the addresses associated with the ports 42a, 43a, 41 c etc.

Apart from the destination addresses 16, the routing table comprises information regarding intermediate addresses 17, which are associated width a destination address respectively. The intermediate addresses 17 tell the router 4b whereto it is to forward a data packet depending on the destination address of the packet. Assume for instance that the router 4b, when comparing the destination address of a data packet to the destination addresses 16 in the routing table 15, finds that the data packet is to be sent to the address IP(43c) which is associated with the port 43c. The router has no direct connection to the port 43c and must therefore forward the data packet to the router 4c to which the port 43c belongs. However, in order for the data packet to reach the router 4c it must pass via the gateway 3 (see Fig. 1). The next address to which the router 4b is to forward the data packet to is thus the address IP(3) associated width the gateway 3. In order for the router 4b to know that the address IP(3) is the very address to which it is to forward the data packet destined for the port 43c, the address IP(3) is stored as the intermediate address 17 associated with the address IP(43c) in the routing table.

However, the routing table 15 will not comprise information regarding destination addresses that are not associated with any of the ports in the data network 1 of the service provider. Data packets marked with such destination addresses are to be sent to the Internet 2 (see Fig. 1). Thus, the routing table 15 must include information that makes the router 4b forward data packets marked with a destination address that is unknown to the router to the Internet 2. Therefore the routing table 15 stores an intermediate default address 18, which is the address to which the router 4b forwards all traffic that is destined for an unknown destination address. In the example, all traffic destined for the Internet that reaches the router 4b is to be forwarded to the gateway 3, so the address IP(3) is stored as intermediate default address 18 in the routing table 15.

According to a first embodiment of the present invention a first quality of service profile 21 and a second quality of service profile 22 are associated with the routing table 15, as illustrated in Fig. 3. The quality of service profiles 21, 22 are used to perform bandwidth shaping on the different traffic streams that pass through the router 4b. Traffic streams on which the first quality of service profile 21 is applied are allocated bandwidth according to a first set of requirements 21a. In this example, we assume that this first set of requirements 21a only contains the requirement that the total bandwidth for the traffic streams, on which the first quality of service profile 21 is applied, is allowed to be maximum 70Mb/s. Traffic streams on which the second quality of service profile 22 is applied are allocated bandwidth according to a second set of requirements 22a. In this example we assume that the this second set of requirements 22a contains the requirements that the total bandwidth for the traffic streams on which the second quality of service profile is applied must be at least 2Mb/s and is allowed to be maximum 2Mb/s.

According to the invention the router 4b is arranged such that it applies the first quality of service profile 21 on traffic streams whose destination address is known and specified as a destination address 16 in the routing table 15. If the destination address of a traffic stream is unknown in the routing table 15 (such that the packet in the traffic stream will be forwarded to the intermediate default address 18), according to the invention, the router 4b instead applies the second quality of service profile 22 on the traffic stream.

Thus, by means of arranging the router 4b as described above bandwidth shaping, which is adapted to different traffic streams and which depends on the destination of the traffic streams, can be achieved. When all the routers 4a, 4b, 4c and the gateway 3 are provided with corresponding first and second quality of service profiles that are associated with the routing tables of the routers and the gateway, a possibility to control the bandwidth usage for traffic streams in the data network of the service provider and for traffic streams out towards the Internet is obtained.

Fig. 4 shows a schematic illustration of a routing table 23 of the gateway 3. In Fig. 4 the same reference numerals as in Fig. 3 are used to denote corresponding units. The routing table 23 comprises destination addresses 16 and intermediate addresses 17. In addition the table comprises an intermediate default address 18. The intermediate default address of the routing table 23 is an address IP(X) that is associated with some gateway in the Internet 2, with which the gateway 3 is connected and with which it communicates in order to mediate traffic between the Internet and the data network 1 of the service provider. A first quality of service profile 21 and a second quality of service profile 22 are associated with the routing table 23. The gateway 3 is according to the invention arranged to apply the first quality of service profile 21 on traffic streams whose destination address indicates that the traffic stream is to be forwarded to any of the destination addresses 16 in the routing table 23 and to apply the second quality of service profile on traffic streams with destination addresses for which information is missing in the routing table 23. The first quality of service profile 21 in Fig. 4 comprises a first set of requirements 21 b, which in the example is that the total bandwidth of traffic streams on which the first quality of service profile 21 is applied is allowed to be maximum 70Mb/s. The second quality of service profile 22 in Fig. 4 comprises a second set of requirements 22b, which in the example is that the total bandwidth of traffic streams on which the second quality of service profile 22 is applied must be at least 30Mb/s and is allowed to be maximum 30Mb/s.

In the routing tables 15, 23 illustrated in Fig. 3 and Fig. 4, the destination addresses to all relevant ports illustrated in Fig. 1 are specified. It is however possible that the routing tables instead only specifies subnet addresses on a higher level. In the example above this could mean that instead of separately specifying the addresses IP(41a), IP(42a) and IP(43a) in the routing table, as shown in Fig. 3 and Fig. 4, only the address IP(4a) is specified as destination address 16. The router or the gateway would then work in the same way as described above, with the only difference that it would compare the destination address of a data packet with the address IP(4a) in the routing table to determine whether or not the packet is to be forwarded to this address, instead of comparing it with the addresses IP(41a), IP(42a) and IP(43a) like before. Since all data packets that are destined for the addresses IP(41a), IP(42a) and IP(43a) also have to pass IP(4a) the routing result will be the same in both cases.

The bandwidth requirements that the quality of service profiles 21, 22 comprise may be chosen freely. Parameters that may influence the choice of requirements may for instance be the available bandwidth on the connections in the network and the desired quality of service of the clients. In the examples, the sets of bandwidth requirements 21a, 21b, 22a, 22b, which comprise values for the maximum bandwidth that different traffic streams may be allocated, were described. The second sets of bandwidth requirements 22a, 22b further comprise values for the minimum bandwidth that traffic streams should be allocated. The values of this maximum and minimum bandwidth may of course vary.

The sets of requirements may vary depending on the router or the gateway to which the set of requirements belongs, as is apparent from the examples described above. This enables the service provider O to provide differentiated services.

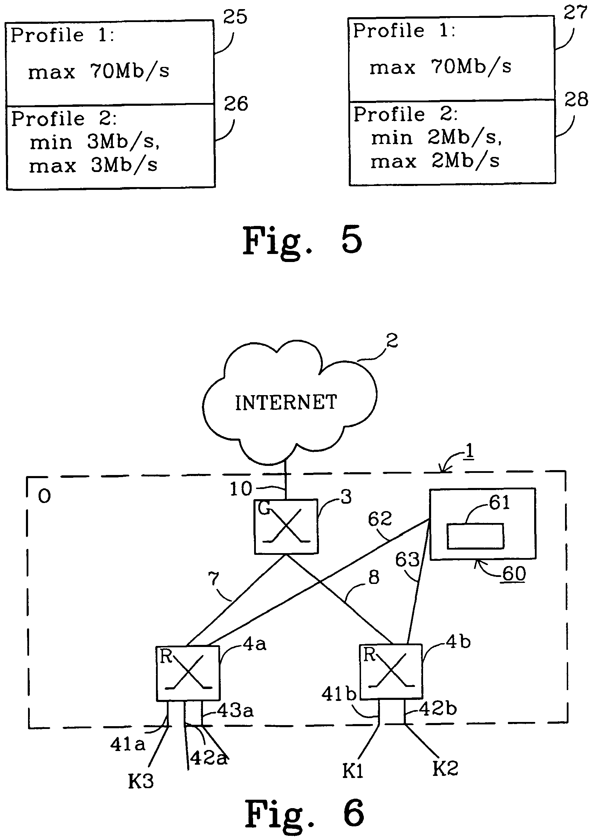

Assume for instance that the service provider O offers two types of service, a first more expensive service and a second cheaper service. The difference between the services is that clients who have the first more expensive service
compete for comparatively more bandwidth per client out to the Internet than the clients who have the second cheaper service do. It can be compared to a freeway where the clients who have the first service are offered to drive in a VIP-lane, wherein not many other clients are allowed to drive. Such a service may, according to the present invention, be implemented in the data network 1 of the service provider, according to Fig. 1, by means of connecting all the clients of the first service to the router 4a and clients of the second service to the router 4c and apply different quality of service profiles in the routers 4a and 4c. In this simplified example, three clients may be connected to the router 4a and four clients to the router 4c. The service provider may for instance have decided that the maximum bandwidth out to the Internet is allowed to be 3Mb/s from the router 4a, while the corresponding bandwidth from the router 4c is allowed to be 2Mb/s. The allowed bandwidth out towards the Internet divided by the number of connected clients is then twice as high for the router 4a as for the router 4c, which appears to be logic since the clients connected to the router 4a have bought the first more expensive service. The quality of service profiles that are applied in the routers 4a and 4c may look like in Fig. 5. The router 4a comprises a first quality of service profile 25 and a second quality of service profile 26, which are associated with the routing table of the router 4a as described above, such that the first quality of service profile 25 is applied to traffic streams whose destination address is known in the routing table of the router 4a and the second quality of service profile 26 is applied to traffic streams whose destination address is unknown in the routing table of the router 4a. The traffic streams to which the first quality of service profile 25 is applied are allocated a total maximum bandwidth of 70Mb/s, while the traffic streams to which the second quality of service profile 26 is applied are allocated a total of at least 3Mb/s and maximum 3Mb/s. Correspondingly, the router 4c comprises a first quality of service profile 27 and a second quality of service profile 28, which in a corresponding way are associated with the routing table of the router 4c. The traffic streams to which the first quality of service profile 27 is applied are allocated a total maximum bandwidth of 70Mb/s, while the traffic streams to which the second quality of service profile 28 is applied are allocated at least 2Mb/s and maximum 2Mb/s. Naturally the quality of service profiles that are applied in the gateway 3 have to be adapted so that the gateway 3 does not become a bottle neck for the traffic out towards the Internet.

However, the embodiment of the present invention described above does not allow for the service provider to guarantee an individual client a certain determined bandwidth towards the Internet. In the example described above, it would for instance be possible for a client connected to the port 41a to outrival the client connected to the port 42a so that this client is not given any, or very little, bandwidth to the Internet. An embodiment of the present invention that enables the service provider to offer clients a guaranteed bandwidth to the Internet is described below.

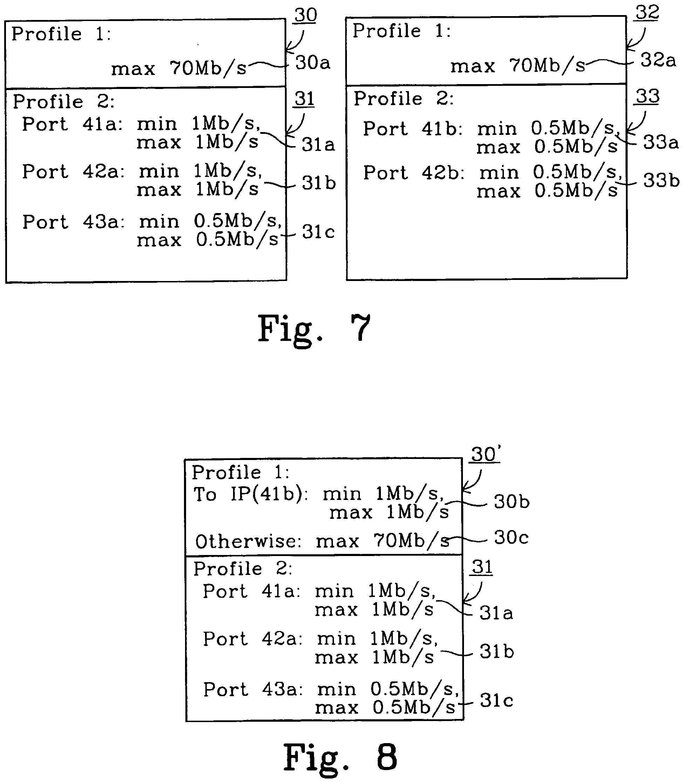

Fig. 6 shows a system for data communication similar to the one described in Fig. 1. The same reference numeral as in Fig. 1 are used in Fig. 6 to denote similar units, so these are not specifically explained. Assume for instance that a client K3 connected to the port 41a desires a guaranteed bandwidth of 1Mb/s to the Internet, while the client K1, connected to the port 41 b only is willing to pay for a guaranteed bandwidth of 0.5 Mb/s to the Internet. According to the present invention, it is possible to fulfill the demands of the clients K1 and K3 by means of applying a first and a second quality of service profile 30, 31 in the router 4a as shown in Fig. 7, and by means of applying a first and a second quality of service profile 32, 33 in the router 4b. Like in the previously described embodiments, the first quality of service profiles 30, 32 are applied, in the routers 4a and 4b respectively, to traffic streams whose destination address is known in the routing tables of the routers, and the second quality of service profiles 31, 33 are applied on traffic streams whose destination address is not specified in the routing tables of the routers. The first quality of service profiles comprise first sets of quality requirements 30a and 32a, which are applied equally to all traffic streams in the routers with known destination address. On the other hand, the second quality of service profiles 31, 33 comprise second sets of quality requirements, which include several requirements 31 a, 31b, 31c, 33a, 33b, which are applied differently to different traffic streams. The decisive factor for which of the plurality of requirements that is applied to which traffic stream is the port that the stream originates from. In the router 4a, the requirement 31a is applied on traffic streams with unknown destination that originate from the port 41a. The requirement 31b is applied, in the router 4a, to traffic streams with unknown destination that originate from the port 42a. The requirement 31 c is applied, in the router 4a, to traffic streams with unknown destination that originate from the port 43a. Correspondingly, in the router 4b, the requirements 33a and 33b are applied to traffic streams with unknown destination that originate from the ports 41b and 42b respectively. Thus the present invention enables the service provider O to treat the clients K1 and K3 differently by letting the requirement 31a comprise a bandwidth requirement that states that the streams to which the requirement 31a is applied are to be allocated bandwidth of at least 1Mb/s and maximum 1Mb/s, and by letting the requirement 33a comprise a bandwidth requirement that states that the streams to which the requirement 33a is applied are to be allocated bandwidth of at least 0.5Mb/s and maximum 0.5Mb/s

In the example above, the decisive factor for which of the requirements 31a, 31b, 31c, 33a, 33b that is applied to which traffic stream was the port that the stream originates from. An alternative embodiment is to let the source address of the stream be decisive of which requirement to apply, instead of the port. The source of a stream may for instance be a computer terminal that is directly connected to one of the ports of the routers 4a, 4b or a computer terminal that is connected to one of the ports of the routers 4a, 4b via a client data network. In the examples described above, all traffic streams with known destination address were bandwidth shaped according to the same terms in the respective routers since the first quality of service profile only comprised one requirement that was valid for all traffic streams with known destination address through the router. If it would he desirable to provide a particular bandwidth shaping to a certain traffic stream with known destination address, this is also possible according to the present invention. If it for instance is of interest to guarantee that a client K3 is able to transmit data of a guaranteed bandwidth of 1 Mb/s to the client K1, the first quality of service profile 30 in Fig. 7 may be modified to look like the quality of service profile 30' in Fig. 8. The quality of service profile 30' comprises two requirements 30b and 30c. The choice of which requirement 30b, 30c to apply can be made in the following fashion. First the router 4a examines whether a received data packet belongs to a traffic stream with a known or unknown destination by means of examining the routing table as described above. If the destination address is known, the router examines whether the requirement 30b is to be applied by means of reading from the destination address of the data packet whether or not the data packet is to be sent to the port 41b. If the data packet is to be sent to the port 41b, the requirement 30b is applied for bandwidth shaping of the traffic stream to which the data packet belongs, otherwise the requirement 30c is applied.

The embodiments described above show that practically an endless number of variations of bandwidth shaping can be performed according to the present invention. The bandwidth usage of different traffic streams may be controlled in more or less detail according to the desires of the service provider and the clients. The finesse of the present invention enables good control of the bandwidth usage within the data network and out to the Internet without controlling each individual stream in detail. This is possible by means of the present invention using quality of service profiles that are dependent on information in routing tables.

A matter that has not been discussed above is how the routers make sure that the chosen bandwidth requirements are obeyed. There are many known techniques for this. Most of them are based on some form of more or less complicated queuing system, which often is based on complicated hardware design. Since the present invention makes use of existing mechanisms for making sure that an allocated bandwidth is obeyed, these mechanisms are not described in detail herein.

The present invention has been described above by means of examples based on very small and simple network structures. Naturally, the present invention is not limited to any specific network structure, but can be employed in data networks with routers arranged in several hierarchical levels that are much larger than the ones described above. The larger the network the more complicated it becomes to determine suitable sets of requirements in the quality of service profiles.

A major advantage of the present invention is, as mentioned above, that the bandwidth shaping provided by the present invention is self-configuring such that often no particular adjustments in existing quality of service profiles are required when the data network changes, for example by means of yet another router or client equipment being connected to the data network. When a new router is added to the network, the information concerning this router will be added to the routing tables of the old routers. This is done according to known technology by the routers communicating with each other with protocols that are particularly adapted for this purpose. Thanks to the quality of service profiles being based on the information contents of the routing tables, which is updated when the new router is added, it will also be possible to apply the bandwidth shaping according to the present invention to traffic streams to the new router, in precisely the same way as to traffic streams to the old routers. It is thus possible that the existing quality of service profiles will not have to be updated at all when the data network is expanded with the new router. However, established quality requirements and available bandwidth in the data network may imply that it is desirable to adjust bandwidth requirement values in the existing quality of service profiles when a new router is added. Such adjustments are of course possible in such a case.

The present invention further provides a superordinate operating system that is arranged to provide the routers of the data network with quality of service profiles that are associated with the routing tables as described above. Such a superordinate operating system 60 is illustrated in Fig. 6. The superordinate operating system comprises means 61 for communicating with the routers 4a, 4b via communications connections 62, 63. The communications connections 62, 63 may be direct or indirect connections, in so far as they may pass via some data network or may pass through other units. By means of the superordinate operating system, the service provider O may enter parameters relating to his desired bandwidth shaping. The superordinate operating system is arranged to, based on these entered parameters, provide the routers 4a, 4b with the quality of service profiles 30-33 via the communications connections 62, 63. The superordinate operating system is furthermore arranged to offer the service provider a possibility to update the quality of service profiles if the service provider wishes to make an adjustment to the bandwidth shaping.

The quality of service profiles according to the present invention, as well as their association with the routing tables, are preferably implemented in software in the routers.

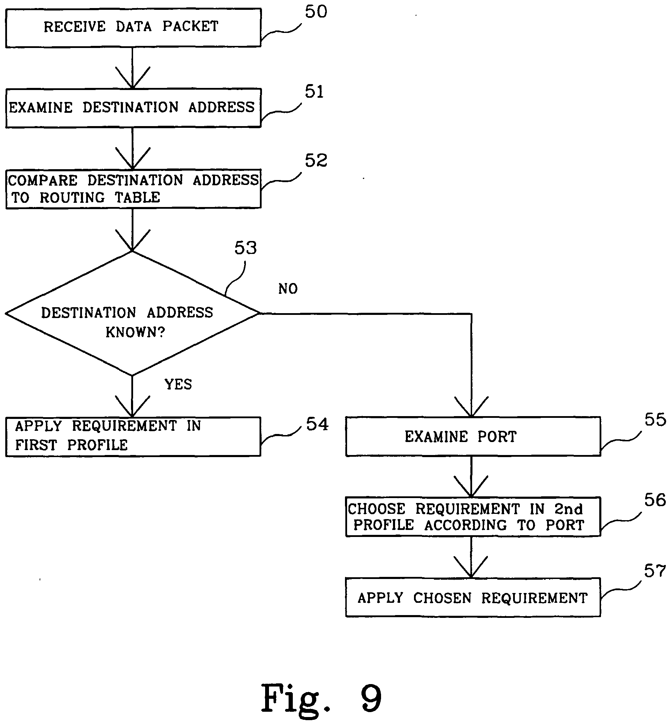

In order to clarify the method for bandwidth shaping according to the present invention, an embodiment of the method is described below with reference to the flow diagram of Fig. 9. The method described in Fig. 9 is based on the use of quality of service profiles of the same type as the quality of service profiles 30-33 illustrated in Fig. 7. In a first step 50, a data packet is received in a router. The router then examines the destination address of the packet, step 51. In a step 52, the router compares the destination address of the data packet with the destination addresses that are specified in the routing table of the router. If the routing table contains a specified destination address that corresponds to the data packet of the destination address, such that the router sees that the data packet is to be sent to the specified destination address, step 53, the first quality of service profile is applied to bandwidth shape the data packet and the traffic stream to which it belongs, step 54. If the router does not find any such specified destination address in the routing table that corresponds to the destination address of the data packet, the router knows that the second quality of service profile is to be applied for bandwidth shaping and continues to examine at which port the data packet was received, step 55, in order to decide which of the bandwidth requirements of the second quality of service profile is relevant. In a subsequent step 56, the router chooses the requirement that is relevant for the port that the data packet originates from. In a further step 57, the bandwidth shaping is performed on the data packet and on the stream to which it belongs, in accordance with the chosen requirement in the second quality of service profile.

If it is desirable to treat all traffic streams to unknown destinations alike such as described for some of the embodiments above, it is not necessary to perform the steps 55a and 56, wherein a requirement is chosen based on the port that the stream originates from. These steps are superfluous since the second quality of service profile then contains only one bandwidth requirement that is applied equally to all traffic streams to unknown destinations.

In the embodiments described above, it has been presumed that data packets that are forwarded to an unknown destination are forwarded to the Internet. It is however not necessary that these packets are sent precisely to the Internet. They could also be forwarded to some other data network of a service provider. It is thus to be understood that what is described as the Internet in the embodiments not necessarily has to be the Internet, but it can also be some other type of network.

In that which has been described above, the router has used information in the routing tables to choose a quality of service profile to be applied to some particular traffic stream. The information that is used in the examples described above is information regarding whether a destination address is known and specified in the routing table or not. It is also imaginable that the information in the routing tables that the router uses to choose quality of service profile is of some other kind. If for instance the known specified destination address are separated into two different classes, the router may be arranged to choose between three different quality of service profiles, depending on whether the destination address is known and belongs to the first or second class, or whether it is unknown.

## Claims

1. A router (4a, 4b, 4c) for routing data communications traffic comprising a routing table (15, 23), and at least two quality of service profiles (21, 22), of which a fist quality of service profile (21) specifies a first set of requirements (21a, 21b) for allocation of bandwidth and a second quality of service profile (22) specifies a second set of requirements (22a, 22b) for allocation of bandwidth, which router is arranged to receive data packets on at least two ports (41a-43a, 41b, 42b, 41c-44c), and to route data packets according to information in the data packets regarding their destination address, **characterized in that** the quality of service profiles (21, 22) are associated with the routing table (15, 23) and **in that** the router is arranged to perform bandwidth shaping on a traffic stream associated with a first data packet by means of a mechanism controlling the bandwidth usage of the traffic stream such that the bandwidth usage does not exceed a maximum bandwidth allocation requirement of a chosen quality of service profile and in accordance to the first quality of service profile (21) or the second quality of service profile (22) depending on information (16) in the routing table (15, 23) regarding the destination address of the first data packet.

2. The router according to claim 1, **wherein** the router is arranged to apply the first quality of service profile (21) if the destination address of the first data packet is specified in the routing table (15, 23) and according to the second quality of service profile (22) if the destination address of the first data packet is not specified in the routing table (15, 23).

3. The router according to claim 1 or 2, wherein the router is arranged is arranged to route the first data packet to an external data network (2) if the destination address of the first data packet is not specified in the routing table (15,23).

4. The router according to claim 3, **wherein** the external data network (2) is the Internet.

5. The router according to any of the claims 1-4, **wherein** the first set of requirements and/or the second set of requirements includes at least two requirements (31a, 31b, 31c, 33a, 33b) and in that the router is arranged to perform the bandwidth shaping according to one of these at least two requirements depending on at which of the at least two ports (41a-43a, 41 b, 42b, 41c-44c) of the router the first data packet was received.

6. The router according to any of the claims 1-5, wherein the first set of requirements includes at least one first requirement (30b) for allocation of bandwidth to traffic streams to a predetermined destination address (16) which is specified in the routing table (15,23) and at least one second requirement (30c) for allocation of bandwidth to traffic streams to other destination addresses (16) which are specified in the routing table (15, 23) but which are not predetermined for said at least one first requirement (30b).

7. A method for bandwidth shaping, which method involves a router (4a, 4b, 4c) for routing data communications traffic comprising at least two ports (41a-43a, 41 b, 42b, 41c-44c), a routing table (15, 23), and at least two quality of service profiles (21, 22), of which a first quality of service profile (21) specifies a first set of requirements (21a, 21b) for allocation of bandwidth and a second quality of service profile specifies a second set of requirements (22a, 22b) for allocation of bandwidth, which method includes the step (50) of receiving a first data packet on one of the ports of the router and the step of routing the first data packet according to information in the first data packet regarding its destination address, **characterized by** the method further including the step (53) of choosing the first quality of service profile (21) or the second quality of service profile (22) depending on information (16) in the routing table (15, 23) regarding the destination address of the first data packet and the step (54, 57) of performing bandwidth shaping on a traffic stream associated with the first data packet according to the chosen quality of service profile in such a way that the bandwidth usage of the traffic stream controlled such that the bandwidth usage does not exceed a maximum bandwidth allocation requirement of the chosen quality of service profile.

8. The method according to claim 7, **wherein** the method involves applying the first quality of service profile (21) if the destination address of the first data packet is specified in the routing table (15, 23) and the second quality of service profile (22) if the destination address of the first data packet is not specified in the routing table (15, 23).

9. The method according to claim 7 or 8, **wherein** the method involves routing the first data packet to an external data network (2) if the destination address of the first data packet is not specified in the routing table (15,23).

10. The method according to claim 9, **wherein** the external data network (2) is the Internet.

11. The method according to any of the claims 7-10, **wherein** the first set of requirements and/or the second set of requirements including at least two requirements (31a, 31b, 31c, 33a, 33b) and by the further step (56) of choosing one of these at least two requirements for bandwidth shaping depending on at which of the at least two ports (41a-43a, 41b, 42b, 41c-44c) of the router the first data packet was received.

12. The method according to any of the claims 7-11, **wherein** the first set of requirements includes at least one first requirement (30b) for allocation of bandwidth to traffic streams to a predetermined destination address (16) which is specified in the routing table (15,23) and at least one second requirement (30c) for allocation of bandwidth to traffic streams to other destination addresses (16) which are specified in the routing table (15, 23) but which are not predetermined for said at least one first requirement (30b).

13. Superordinate operating system (60) for updating at least one router (4a, 4b, 4c) according to any of claims 1-6 in a data communications system, which superordinate operating system (60) includes means (61) for communicating with the at least one router, **characterized in that** the at least one router is a router according to any of claims 1-6, and wherein the superordinate operating system (60) includes means (61) for providing the router (4a, 4b, 4c) with at least two quality of service profiles (21, 22), of which a first quality of service profile (21) specifies a first set of requirements (21a, 21b) for allocation of bandwidth and a second quality of service profile (22) specifies a second set of requirements (22a, 22b) for allocation of bandwidth, which quality of service profiles (21, 22) are associated with the routing table (15, 23) such that they include instructions to the router for performing bandwidth shaping on a traffic stream associated with a first data packet according to the first quality of service profile (21) or the second quality of service profile (22) depending on information in the routing table (15, 23) regarding the destination address of the first data packet.

14. The superordinate operating system (60) according to claim 13, **wherein** the first quality of service profile (21) is arranged to be applied for bandwidth shaping if the destination address of the first data packet is specified in the routing table (15, 23) and in that the second quality of service profile (22) is arranged to be applied for bandwidth shaping if the destination address of the first data packet is not specified in the routing table (15, 23).

15. The superordinate operating system (60) according to claim 13 or 14,
wherein the first set of requirements and/or the second set of requirements includes at least two requirements (31a, 31b, 31c, 33a, 33b) which are arranged to be applied or not applied for bandwidth shaping depending on at which of the at least two ports (41a-43a, 41 b, 42b, 41c-44c) of the router the first data packet was received.

16. The superordinate operating system (60) according to any of the claims 13-15, wherein the first set of requirements includes at least one first requirement (30b) for allocation of bandwidth to traffic streams to a predetermined destination address (16) which is specified in the routing table (15,23) and at least one second requirement (30c) for allocation of bandwidth to traffic streams to other destination addresses (16) which are specified in the routing table (15, 23) but which are not predetermined for said at least one first requirement (30b).

17. A data communications system **characterized in that** it includes a data network including at least one router (4a, 4b, 4c) according to any of the claims 1-6.

18. The data communications system according to claim 17, **wherein** it further includes at least one superordinate operating system (60) according to any of the claims 13-16.

19. The data communications system according to claim 17 or 18,
**wherein** it comprises at least one connection between at least one of the at least one router (4a, 4b, 4c) and at least one set of client equipment (5, 6).

20. The data communications system according to any of the claims 17-19,
**wherein** it includes at least one connection (10) to an external data network (2).

21. The data communications system according to claim 20, **wherein** the external data network (2) is the Internet.

## Patentansprüche

1. Router (4a, 4b, 4c) zur Leitweglenkung von Datenkommunikationsverkehr, umfassend eine Leitweglenkungstabelle (15, 23) und mindestens zwei Dienstgüteprofile (21, 22), von denen ein erstes Dienstgüteprofil (21) eine erste Menge von Anforderungen (21a, 21b) zur Bandbreitenzuteilung festlegt und ein zweites Dienstgüteprofil (22) eine zweite Menge von Anforderungen (22a, 22b) zur Bandbreitenzuteilung festlegt, wobei der Router dafür eingerichtet ist, Datenpakete an mindestens zwei Ports (41a-43a, 41b, 42b, 41c-44c) zu empfangen und Datenpakete gemäß Information in den Datenpaketen bezüglich ihrer Zieladresse weiterzuleiten, **dadurch gekennzeichnet, dass** die Dienstgüteprofile (21, 22) der Leitweglenkungstabelle (15, 23) zugeordnet sind und dass der Router dafür eingerichtet ist, Bandbreitenformung an einem Verkehrsstrom durchzuführen, der einem ersten Datenpaket zugeordnet ist, und zwar mittels eines Mechanismus, der die Bandbreitennutzung des Verkehrsstroms so steuert, dass die Bandbreitennutzung eine maximale Bandbreitenzuteilungsanforderung eines gewählten Dienstgüteprofils nicht überschreitet, und zwar gemäß dem ersten Dienstgüteprofil (21) oder dem zweiten Dienstgüteprofil (22), abhängig von Information (16) in der Leitweglenkungstabelle (15, 23) bezüglich der Zieladresse des ersten Datenpakets.

2. Router nach Anspruch 1, wobei der Router dafür eingerichtet ist, das erste Dienstgüteprofil (21) anzuwenden, wenn die Zieladresse des ersten Datenpakets in der Leitweglenkungstabelle (15, 23) festgelegt ist, und das zweite Dienstgüteprofil (22) anzuwenden, wenn die Zieladresse des ersten Datenpakets nicht in der Leitweglenkungstabelle (15, 23) festgelegt ist.

3. Router nach Anspruch 1 oder 2, wobei der Router dafür eingerichtet ist, das erste Datenpaket zu einem externen Datennetzwerk (2) weiterzuleiten, wenn die Zieladresse des ersten Datenpakets nicht in der Leitweglenkungstabelle (15, 23) festgelegt ist.

4. Router nach Anspruch 3, wobei das externe Datennetzwerk (2) das Internet ist.

5. Router nach einem der Ansprüche 1 bis 4, wobei die erste Menge von Anforderungen und/oder die zweite Menge von Anforderungen mindestens zwei Anforderungen (31a, 31b, 31c, 33a, 33b) aufweist und **dadurch gekennzeichnet, dass** der Router dafür eingerichtet ist, die Bandbreitenformung gemäß einer dieser mindestens zwei Anforderungen durchzuführen, abhängig davon, an welchem der mindestens zwei Ports (41a-43a, 41b, 42b, 41c-44c) des Routers das erste Datenpaket empfangen wurde.

6. Router nach einem der Ansprüche 1 bis 5, wobei die erste Menge von Anforderungen mindestens eine erste Anforderung (30b) zur Bandbreitenzuteilung zu Verkehrsströmen zu einer vorbestimmten Zieladresse (16), die in der Leitweglenkungstabelle (15, 23) festgelegt ist, und mindestens eine zweite Anforderung (30c) zur Bandbreitenzuteilung zu Verkehrsströmen zu anderen Zieladressen (16), die in der Leitweglenkungstabelle (15, 23) festgelegt sind, aber nicht für die mindestens eine erste Anforderung (30b) vorbestimmt sind, umfasst.

7. Verfahren zur Bandbreitenformung, wobei das Verfahren einen Router (4a, 4b, 4c) zur Leitweglenkung von Datenkommunikationsverkehr betrifft, der mindestens zwei Ports (41a-43a, 41b, 42b, 41c-44c), eine Leitweglenkungstabelle (15, 23) und mindestens zwei Dienstgüteprofile (21, 22) umfasst, von denen ein erstes Dienstgüteprofil (21) eine erste Menge von Anforderungen (21a, 21b) zur Bandbreitenzuteilung festlegt und ein zweites Dienstgüteprofil (22) eine zweite Menge von Anforderungen (22a, 22b) zur Bandbreitenzuteilung festlegt, wobei das Verfahren den Schritt (50) aufweist: Empfangen eines ersten Datenpakets an einem der Ports des Routers; und den Schritt: Weiterleiten des ersten Datenpakets gemäß Information im ersten Datenpaket bezüglich seiner Zieladresse, **dadurch gekennzeichnet, dass** das Verfahren ferner den Schritt (53) aufweist: Wählen des ersten Dienstgüteprofils (21) oder des zweiten Dienstgüteprofils (22), abhängig von Information (16) in der Leitweglenkungstabelle (15, 23) bezüglich der Zieladresse des ersten Datenpakets; und den Schritt (54, 57): Durchführen von Bandbreitenformung an einem dem ersten Datenpaket zugeordneten Verkehrsstrom gemäß dem gewählten Dienstgüteprofil, und zwar auf eine solche Weise, dass die Bandbreitennutzung des Verkehrsstroms so gesteuert wird, dass die Bandbreitennutzung eine maximale Bandbreitenzuteilungsanforderung des gewählten Dienstgüteprofils nicht überschreitet.

8. Verfahren nach Anspruch 7, wobei das Verfahren betrifft: Anwenden des ersten Dienstgüteprofils (21), wenn die Zieladresse des ersten Datenpakets in der Leitweglenkungstabelle (15, 23) festgelegt ist, und des zweiten Dienstgüteprofils (22), wenn die Zieladresse des ersten Datenpakets nicht in der Leitweglenkungstabelle (15, 23) festgelegt ist.

9. Verfahren nach Anspruch 7 oder 8, wobei das Verfahren betrifft: Weiterleiten des ersten Datenpakets zu einem externen Datennetzwerk (2), wenn die Zieladresse des ersten Datenpakets nicht in der Leitweglenkungstabelle (15, 23) festgelegt ist.

10. Verfahren nach Anspruch 9, wobei das externe Datennetzwerk (2) das Internet ist.

11. Verfahren nach einem der Ansprüche 7 bis 10, wobei die erste Menge von Anforderungen und/oder die zweite Menge von Anforderungen mindestens zwei Anforderungen (31a, 31b, 31c, 33a, 33b) aufweist, und **gekennzeichnet durch** den weiteren Schritt (56): Wählen einer dieser mindestens zwei Anforderungen für die Bandbreitenformung, abhängig davon, an welchem der mindestens zwei Ports (41a-43a, 41b, 42b, 41c-44c) des Routers das erste Datenpaket empfangen wurde.

12. Verfahren nach einem der Ansprüche 7 bis 11, wobei die erste Menge von Anforderungen mindestens eine erste Anforderung (30b) zur Bandbreitenzuteilung zu Verkehrsströmen zu einer vorbestimmten Zieladresse (16), die in der Leitweglenkungstabelle (15, 23) festgelegt ist, und mindestens eine zweite Anforderung (30c) zur Bandbreitenzuteilung zu Verkehrsströmen zu anderen Zieladressen (16), die in der Leitweglenkungstabelle (15, 23) festgelegt sind, aber nicht für die mindestens eine erste Anforderung (30b) vorbestimmt sind, umfasst.

13. Übergeordnetes Betriebssystem (60) zum Aktualisieren mindestens eines Routers (4a, 4b, 4c) nach einem der Ansprüche 1 bis 6 in einem Datenkommunikationssystem, wobei das übergeordnete Betriebssystem (60) Mittel (61) zum Kommunizieren mit dem mindestens einen Router aufweist,
**dadurch gekennzeichnet, dass** der mindestens eine Router ein Router nach einem der Ansprüche 1 bis 6 ist, und wobei das übergeordnete Betriebssystem (60) Mittel (61) zum Versorgen des Routers (4a, 4b, 4c) mit mindestens zwei Dienstgüteprofilen (21, 22) aufweist, von denen ein erstes Dienstgüteprofil (21) eine erste Menge von Anforderungen (21a, 21b) zur Bandbreitenzuteilung festlegt und ein zweites Dienstgüteprofil (22) eine zweite Menge von Anforderungen (22a, 22b) zur Bandbreitenzuteilung festlegt, wobei die Dienstgüteprofile (21, 22) der Leitweglenkungstabelle (15, 23) so zugeordnet sind, dass sie Anweisungen für den Router zum Durchführen von Bandbreitenformung an einem Verkehrsstrom aufweisen, der einem ersten Datenpaket zugeordnet ist, und zwar gemäß dem ersten Dienstgüteprofil (21) oder dem zweiten Dienstgüteprofil (22), abhängig von Information in der Leitweglenkungstabelle (15, 23) bezüglich der Zieladresse des ersten Datenpakets.

14. Übergeordnetes Betriebssystem (60) nach Anspruch 13, wobei das erste Dienstgüteprofil (21) dafür eingerichtet ist, für die Bandbreitenformung angewendet zu werden, wenn die Zieladresse des ersten Datenpakets in der Leitweglenkungstabelle (15, 23) festgelegt ist, und das zweite Dienstgüteprofil (22) dafür eingerichtet ist, für die Bandbreitenformung angewendet zu werden, wenn die Zieladresse des ersten Datenpakets nicht in der Leitweglenkungstabelle (15, 23) festgelegt ist.

15. Übergeordnetes Betriebssystem (60) nach Anspruch 13 oder 14, wobei die erste Menge von Anforderungen und/oder die zweite Menge von Anforderungen mindestens zwei Anforderungen (31a, 31b, 31c, 33a, 33b) aufweist, die dafür eingerichtet sind, zur Bandbreitenformung angewendet zu werden oder nicht, abhängig davon, an welchem der mindestens zwei Ports (41a-43a, 41b, 42b, 41c-44c) des Routers das erste Datenpaket empfangen wurde.

16. Übergeordnetes Betriebssystem (60) nach einem der Ansprüche 13 bis 15, wobei die erste Menge von Anforderungen mindestens eine erste Anforderung (30b) zur Bandbreitenzuteilung zu Verkehrsströmen zu einer vorbestimmten Zieladresse (16), die in der Leitweglenkungstabelle (15, 23) festgelegt ist, und mindestens eine zweite Anforderung (30c) zur Bandbreitenzuteilung zu Verkehrsströmen zu anderen Zieladressen (16), die in der Leitweglenkungstabelle (15, 23) festgelegt sind, aber nicht für die mindestens eine erste Anforderung (30b) vorbestimmt sind, umfasst.

17. Datenkommunikationssystem, **dadurch gekennzeichnet, dass** es ein Datennetzwerk aufweist, das mindestens einen Router (4a, 4b, 4c) nach einem der Ansprüche 1 bis 6 aufweist.

18. Datenkommunikationssystem nach Anspruch 17, wobei es ferner mindestens ein übergeordnetes Betriebssystem (60) nach einem der Ansprüche 13 bis 16 aufweist.

19. Datenkommunikationssystem nach Anspruch 17 oder 18, wobei es mindestens eine Verbindung zwischen mindestens einem des mindestens einen Routers (4a, 4b, 4c) und mindestens einer Menge von Clienteinrichtungen (5, 6) umfasst.

20. Datenkommunikationssystem nach einem der Ansprüche 17 bis 19, wobei es mindestens eine Verbindung (10) zu einem externen Datennetzwerk (2) aufweist.

21. Datenkommunikationssystem nach Anspruch 20, wobei das externe Datennetzwerk (2) das Internet ist.

## Revendications

1. Routeur (4a, 4b, 4c) destiné à acheminer du trafic de communication de données, comprenant une table d'acheminement (15, 23), et au moins deux profils de qualité de service (21, 22), dont un premier profil de qualité de service (21) spécifie un premier ensemble d'exigences (21a, 21b) en vue d'une affectation de largeur de bande, et un second profil de qualité de service (22) spécifie un second ensemble d'exigences (22a, 22b) en vue d'une affectation de largeur de bande, lequel routeur est agencé de manière à recevoir des paquets de données sur au moins deux ports (41a - 43a, 41b, 42b, 41c - 44c), et à acheminer des paquets de données selon des informations incluses dans les paquets de données concernant leur adresse de destination, **caractérisé en ce que** les profils de qualité de service (21, 22) sont associés à la table d'acheminement (15, 23), et **en ce que** le routeur est agencé de manière à mettre en oeuvre une mise en forme de largeur de bande sur un flux de trafic associé à un premier paquet de données au moyen d'un mécanisme commandant l'utilisation de largeur de bande du flux de trafic, de sorte que l'utilisation de largeur de bande ne dépasse pas une exigence maximale en matière d'affectation de largeur de bande d'un profil de qualité de service choisi, et selon le premier profil de qualité de service (21) ou le second profil de qualité de service (22), en fonction des informations (16) dans la table d'acheminement (15, 23) concernant l'adresse de destination du premier paquet de données.

2. Routeur selon la revendication 1, dans lequel le routeur est agencé de manière à appliquer le premier profil de qualité de service (21) si l'adresse de destination du premier paquet de données est spécifiée dans la table d'acheminement (15, 23), et le second profil de qualité de service (22) si l'adresse de destination du premier paquet de données n'est pas spécifiée dans la table d'acheminement (15, 23).

3. Routeur selon la revendication 1 ou 2, dans lequel le routeur est agencé de manière à acheminer le premier paquet de données vers un réseau de données externe (2) si l'adresse de destination du premier paquet de données n'est pas spécifiée dans la table d'acheminement (15, 23).

4. Routeur selon la revendication 3, dans lequel le réseau de données externe (2) est le réseau Internet.

5. Routeur selon l'une quelconque des revendications 1 à 4, dans lequel le premier ensemble d'exigences et/ou le second ensemble d'exigences comprennent au moins deux exigences (31a, 31b, 31c, 33a, 33b), et **caractérisé en ce que** le routeur est agencé de manière à mettre en oeuvre la mise en forme de largeur de bande selon l'une desdites au moins deux exigences en fonction du port sur lequel, parmi lesdits au moins deux ports (41a - 43a, 41b, 42b, 41c - 44c) du routeur, le premier paquet de données a été reçu.

6. Routeur selon l'une quelconque des revendications 1 à 5, dans lequel le premier ensemble d'exigences comprend au moins une première exigence (30b) en vue d'une affectation de largeur de bande à des flux de trafic au niveau d'une adresse de destination prédéterminée (16) qui est spécifiée dans la table d'acheminement (15, 23), et au moins une seconde exigence (30c) en vue d'une affectation de largeur de bande à des flux de trafic au niveau d'autres adresses de destination (16) qui sont spécifiées dans la table d'acheminement (15, 23), mais qui ne sont pas prédéterminées pour ladite au moins une première exigence (30b).

7. Procédé de mise en forme de largeur de bande, lequel procédé comporte un routeur (4a, 4b, 4c) destiné à acheminer du trafic de communication de données, comprenant au moins deux ports (41a - 43a, 41b, 42b, 41c - 44c), une table d'acheminement (15, 23), et au moins deux profils de qualité de service (21, 22), dont un premier profil de qualité de service (21) spécifie un premier ensemble d'exigences (21a, 21b) en vue d'une affectation de largeur de bande, et un second profil de qualité de service spécifie un second ensemble d'exigences (22a, 22b) en vue d'une affectation de largeur de bande, lequel procédé comprend l'étape (50) consistant à recevoir un premier paquet de données sur l'un des ports du routeur, et l'étape consistant à acheminer le premier paquet de données selon des informations incluses dans le premier paquet de données concernant son adresse de destination, **caractérisé en ce que** le procédé comporte en outre l'étape (53) consistant à choisir le premier profil de qualité de service (21) ou le second profil de qualité de service (22) en fonction d'informations (16) incluses dans la table d'acheminement (15, 23) concernant l'adresse de destination du premier paquet de données, et l'étape (54, 57) consistant à mettre en oeuvre une mise en forme de largeur de bande sur un flux de trafic associé au premier paquet de données selon le profil de qualité de service choisi, de sorte que l'utilisation de largeur de bande du flux de trafic est commandée de telle manière que l'utilisation de largeur de bande ne dépasse pas une exigence maximale en matière d'affectation de largeur de bande du profil de qualité de service choisi.

8. Procédé selon la revendication 7, dans lequel le procédé comporte l'étape consistant à appliquer le premier profil de qualité de service (21) si l'adresse de destination du premier paquet de données est spécifiée dans la table d'acheminement (15, 23), et le second profil de qualité de service (22) si l'adresse de destination du premier paquet de données n'est pas spécifiée dans la table d'acheminement (15, 23).

9. Procédé selon la revendication 7 ou 8, dans lequel le procédé comporte l'étape consistant à acheminer le premier paquet de données à un réseau de données externe (2) si l'adresse de destination du premier paquet de données n'est pas spécifiée dans la table d'acheminement (15, 23).

10. Procédé selon la revendication 9, dans lequel le réseau de données externe (2) est le réseau Internet.

11. Procédé selon l'une quelconque des revendications 7 à 10, dans lequel le premier ensemble d'exigences et/ou le second ensemble d'exigences comprennent au moins deux exigences (31a, 31b, 31c, 33a, 33b), et **caractérisé en outre par** l'étape (56) consistant à choisir l'une desdites au moins deux exigences, en vue d'une mise en forme de largeur de bande, selon le port sur lequel, parmi lesdits au moins deux ports (41a - 43a, 41b, 42b, 41c - 44c) du routeur, le premier paquet de données a été reçu.

12. Procédé selon l'une quelconque des revendications 7 à 11, dans lequel le premier ensemble d'exigences comprend au moins une première exigence (30b) en vue d'une affectation de largeur de bande à des flux de trafic au niveau d'une adresse de destination prédéterminée (16) qui est spécifiée dans la table d'acheminement (15, 23), et au moins une seconde exigence (30c) en vue d'une affectation de largeur de bande à des flux de trafic au niveau d'autres adresses de destination (16) qui sont spécifiées dans la table d'acheminement (15, 23), mais qui ne sont pas prédéterminées pour ladite au moins une première exigence (30b).

13. Système d'exploitation surordonné (60) destiné à mettre à jour au moins un routeur (4a, 4b, 4c) selon l'une quelconque des revendications 1 à 6 dans un système de communication de données, lequel système d'exploitation surordonné (60) comprend un moyen (61) pour communiquer avec ledit au moins un routeur, **caractérisé en ce que** ledit au moins un routeur est un routeur selon l'une quelconque des revendications 1 à 6, et dans lequel le système d'exploitation surordonné (60) comprend un moyen (61) pour délivrer au routeur (4a, 4b, 4c) au moins deux profils de qualité de service (21, 22), dont un premier profil de qualité de service (21) spécifie un premier ensemble d'exigences (21a, 21b) en vue d'une affectation de largeur de bande, et un second profil de qualité de service (22) spécifie un second ensemble d'exigences (22a, 22b) en vue d'une affectation de largeur de bande, lesquels profils de qualité de service (21, 22) sont associés à la table d'acheminement (15, 23), de sorte qu'ils comprennent des instructions au routeur pour mettre en oeuvre une mise en forme de largeur de bande sur un flux de trafic associé à un premier paquet de données selon le premier profil de qualité de service (21) ou selon le second profil de qualité de service (22), en fonction d'informations incluses dans la table d'acheminement (15, 23) concernant l'adresse de destination du premier paquet de données.

14. Système d'exploitation surordonné (60) selon la revendication 13, dans lequel le premier profil de qualité de service (21) est agencé de manière à être appliqué en vue d'une mise en forme de largeur de bande si l'adresse de destination du premier paquet de données est spécifiée dans la table d'acheminement (15, 23) et dans lequel le second profil de qualité de service (22) est agencé de manière à être appliqué en vue d'une mise en forme de largeur de bande si l'adresse de destination du premier paquet de données n'est pas spécifiée dans la table d'acheminement (15, 23).

15. Système d'exploitation surordonné (60) selon la revendication 13 ou 14, dans lequel le premier ensemble d'exigences et/ou le second ensemble d'exigences comprennent au moins deux exigences (31a, 31b, 31c, 33a, 33b) qui sont agencées de manière à être appliquées ou non en vue d'une mise en forme de largeur de bande selon le port sur lequel, parmi lesdits au moins deux ports (41a - 43a, 41b, 42b, 41c - 44c) du routeur, le premier paquet de données a été reçu.

16. Système d'exploitation surordonné (60) selon l'une quelconque des revendications 13 à 15, dans lequel le premier ensemble d'exigences comprend au moins une première exigence (30b) en vue d'une affectation de largeur de bande à des flux de trafic au niveau d'une adresse de destination prédéterminée (16) qui est spécifiée dans la table d'acheminement (15, 23), et au moins une seconde exigence (30c) en vue d'une affectation de largeur de bande à des flux de trafic au niveau d'autres adresses de destination (16) qui sont spécifiées dans la table d'acheminement (15, 23), mais qui ne sont pas prédéterminées pour ladite au moins une première exigence (30b).

17. Système de communication de données, **caractérisé en ce qu'**il comporte un réseau de données incluant au moins un routeur (4a, 4b, 4c) selon l'une quelconque des revendications 1 à 6.

18. Système de communication de données selon la revendication 17, dans lequel le système comprend en outre au moins un système d'exploitation surordonné (60) selon l'une quelconque des revendications 13 à 16.

19. Système de communication de données selon la revendication 17 ou 18, dans lequel le système comprend au moins une connexion entre au moins l'un parmi ledit au moins un routeur (4a, 4b, 4c) et au moins un ensemble d'équipements de système client (5, 6).

20. Système de communication de données selon l'une quelconque des revendications 17 à 19, dans lequel le système comporte au moins une connexion (10) à un réseau de données externe (2).

21. Système de communication de données selon la revendication 20, dans lequel le réseau de données externe (2) est le réseau Internet.
